# EUROPEAN PATENT APPLICATION

(11) **EP 2 806 650 A2**
(43) Date of publication of application: **26.11.2014**
(21) Application number: 14156210.8
(22) Date of filing: 21.02.2014
(51) Int. Cl.: H04N 21/258, H04N 21/643, H04N 21/472

(54) **Server apparatus, display apparatus, and method for providing a list of applications using the same**

(30) Priority: 21.05.2013 KR 20130057095
(71) Applicant: Samsung Electronics Co., Ltd., Suwon-si Gyeonggi-do 443-742 (KR)
(72) Inventor: Mun, Kyoung-ran, Gyeonggi-do (KR); Song, Jun-hyeok, Gyeonggi-do (KR); Lee, Sang-kwon, Gyeonggi-do (KR); Lee, Young-hwan, Seoul (KR)
(74) Representative: Walaski, Jan Filip

(57) **Abstract**

A method for providing an application list using a server apparatus which is connectable to a display apparatus, is provided. Metadata regarding the display apparatus is provided from the display apparatus, and it is determined whether the display apparatus supports a service based on an Internet Service Provider network. An Internet Service Provider code of an Internet Service Provider network which is connected to the display apparatus is issued, and services provided by an Internet Service Provider are generated. The services correspond to the Internet Service Provider code are generated as an application list, and the application list is transmitted to the display apparatus.

## Description

The present invention relates to a server apparatus, a display apparatus, and a method for providing a list of applications using the same, and more particularly, to a server apparatus configured to provide users with services of an Internet Service Provider in the form of an application list using an Internet Service Provider network, a display apparatus, and a method for providing an application list using the same.

Recently, due to the development of electronic technologies, smart television (TV) has propagated and has been generally used. The smart TV is a TV that includes an operating system (OS) and a central processing unit (CPU), and provides two-way services based on the internet.

In order to provide two-way services based on the internet, the smart TV has to access an internet network provided by an Internet Service Provider. The Internet Service Provider is a company that provides a person or a company with an internet access service, website construction, or a web hosting service.

A related-art Internet Service Provider needs a set-top box that is an additional external device to provide the user with services.

The set-top box recognizes an Internet Service Provider network and supports services provided by the Internet Service Provider through the network.

However, as an additional device such as a set-top box is used, space for the additional device is also needed. Accordingly, there are problems related to space utilization or interior design, additional costs for manufacturing a set-top box are incurred, and excessive standby power is consumed.

Therefore, there is a need for a method of an Internet Service Provider for providing the user with services such as video on demand (VOD) services and game contents in the form of an application without an additional external device.

Exemplary embodiments overcome the above disadvantages and other disadvantages not described above.

The exemplary embodiments provide an Internet Service Provider which provides the user with internet-network-based services through a display apparatus in the form of application list without an additional external apparatus.

According to an aspect of the exemplary embodiments, a method for providing an application list using a server apparatus which is configured to be connected to a display apparatus includes receiving metadata regarding the display apparatus from the display apparatus, determining whether the display apparatus supports a service based on an Internet Service Provider network, issuing an Internet Service Provider code of an Internet Service Provider network which is connected to the display apparatus, and generating services provided by an Internet Service Provider corresponding to the Internet Service Provider code as the application list, and transmitting the application list to the display apparatus.

In the operation of determining whether the display apparatus supports the service based on the Internet Service Provider network, when there is an Internet Service Provider which is mapped with country information included in the metadata, it may be determined that the display apparatus supports the service based on the Internet Service Provider network.

The operation of issuing the Internet Service Provider code may include detecting the Internet Service Provider network which is configured to be connected to the display apparatus, and issuing the Internet Service Provider code corresponding to the Internet Service Provider network.

In the operation of detecting the Internet Service Provider network which is configured to be connected to the display apparatus, an Internet Service Provider network corresponding to internet protocol (IP) address information included in the metadata may be detected from among Internet Service Provider network information which is pre-stored in the server apparatus.

The method may further include when the Internet Service Provider network changes, receiving Internet Service Provider network change information, and reissuing an Internet Service Provider code corresponding to a changed Internet Service Provider network.

According to another aspect of the exemplary embodiments, a server apparatus which is configured to be connected to a display apparatus includes a receiver configured to receive metadata regarding the display apparatus from the display apparatus, a determiner configured to determine whether the display apparatus supports a service based on an Internet Service Provider network, a code issuer configured to issue an Internet Service Provider code of an Internet Service Provider network which is connected to the display apparatus, and a controller configured to generate services provided by an Internet Service Provider corresponding to the Internet Service Provider code as an application list.

The server apparatus may further include a storage configured to store information regarding an Internet Service Provider which is mapped with information regarding a country in which the display apparatus is used, wherein when there is an Internet Service Provider which is mapped with the country information included in the metadata, the determiner may determine that the display apparatus supports the service based on the Internet Service Provider network.

The code issuer may detect the Internet Service Provider network which is connected to the display apparatus, and issue the Internet Service Provider code corresponding to the Internet Service Provider network.

The code issuer may detect, as the Internet Service Provider network which is connected to the display apparatus, an Internet Service Provider network corresponding to internet protocol (IP) address information included in the metadata from among Internet Service Provider network information which is pre-stored in the server apparatus.

When the Internet Service Provider network may change, the receiver may receive Internet Service Provider network change information, and the code issuer may reissue an Internet Service Provider code corresponding to a changed Internet Service Provider network.

According to yet another aspect of the exemplary embodiments, a method for providing an application list using a display apparatus which is connectable to a server apparatus includes transmitting metadata to the server apparatus, receiving an Internet Service Provider code and an authentication key, and accessing the server apparatus using the authentication key, and receiving services provided by an Internet Service Provider corresponding to the Internet Service Provider code in a form of an application list.

The method may further include when an Internet Service Provider network which is connected to the display apparatus changes, transmitting Internet Service Provider network change information, and receiving an Internet Service Provider code corresponding to a changed Internet Service Provider network.

The method may further include selecting an application from the application list, executing the selected application, and accessing a server of the Internet Service Provider and receiving a service provided by the Internet Service Provider.

According to yet another aspect of the exemplary embodiment, a display apparatus which is configured to be connected to a server apparatus includes a storage configured to store metadata of the display apparatus, a communicator configured to transmit the metadata to the server apparatus, and to receive an Internet Service Provider code and an authentication key which correspond to the metadata from the server apparatus, and a controller configured to access the server apparatus using the authentication key, and to request services provided by an Internet Service Provider corresponding to the Internet Service Provider code in a form of an application list.

When an Internet Service Provider network which is connected to the display apparatus changes, the communicator may transmit Internet Service Provider network change information, and the controller may request services provided by a changed Internet Service Provider in the form of an application list.

The display apparatus may further include a display configured to display the services provided by the Internet Service Provider which is connected to the display apparatus in the form of an application list, and a user interface configured to select an application, wherein when an application is selected from the application list, the controller may execute the selected application and access a server of the Internet Service Provider.

According to the exemplary embodiments, the display apparatus can provide users with internet-based two-way services based on an Internet Service Provider network without an external device, and although an Internet Service Provider network changes, the user can receive services by simple manipulation without buying a new set-top box.

Additional and/or other aspects and of the exemplary embodiments will be set forth in part in the description which follows and, in part, will be obvious from the description, or may be learned by practice of the exemplary embodiments.

The above and/or other aspects will be more apparent by describing certain exemplary embodiments with reference to the accompanying drawings, in which:
FIG. 1 is a block diagram of a configuration of a server apparatus according to an exemplary embodiment;
FIG. 2 is a block diagram of a configuration of a display apparatus according to an exemplary embodiment;
FIG. 3 is a timing chart of the operation of the server apparatus and the display apparatus according to an exemplary embodiment;
FIG. 4 is a timing chart of a method for generating a new application list when an Internet Service Provider has changed;
FIG. 5 shows a mapping table according to an exemplary embodiment;
FIG. 6 shows metadata according to an exemplary embodiment;
FIG. 7 shows application metadata which is needed to generate an application list;
FIG. 8 shows an executable application list which is displayed on the display apparatus according to an exemplary embodiment;
FIG. 9 is a flow chart showing a method for providing an application list using the server apparatus according to an exemplary embodiment;
FIG. 10 is a flow chart showing a method for generating an application list when an Internet Service Provider which is connected to the display apparatus has changed according to an exemplary embodiment;
FIG. 11 is a flow chart showing a method for receiving an application list sent from the server apparatus to the display apparatus according to an exemplary embodiment; and
FIG. 12 is a flow chart showing a method for executing an application and receiving a service according to an exemplary embodiment.

Certain exemplary embodiments will now be described in greater detail with reference to the accompanying drawings.

In the following description, same drawing reference numerals are used for the same elements even in different drawings. The matters defined in the description, such as detailed construction and elements, are provided to assist in a comprehensive understanding of the exemplary embodiments. Thus, it is apparent that the exemplary embodiments can be carried out without those specifically defined matters. Also, well-known functions or constructions are not described in detail since they would obscure the exemplary embodiments with unnecessary detail.

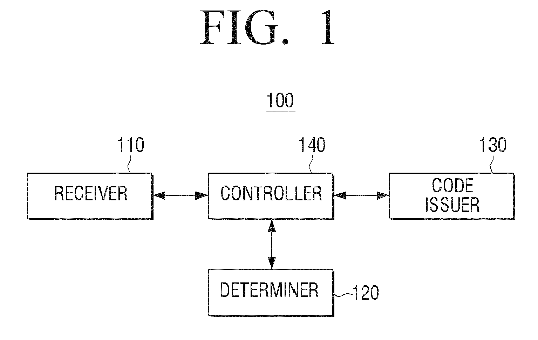

FIG. 1 is a block diagram of a configuration of a server apparatus 100 according to an exemplary embodiment.

As shown in FIG. 1, the server apparatus 100 may include a receiver 110, a determiner 120, a code issuer 130, and a controller 140.

The receiver 110 receives metadata regarding a display apparatus from the display apparatus which is connected to the server apparatus 100. The metadata is structural data or information about data, which describes the display apparatus.

More specifically, the metadata may include a unique identifier (ID) of the display apparatus, a model ID, and information regarding a country in which the display apparatus is used, but is not limited thereto.

The determiner 120 determines whether the display apparatus 200 which is connected to the server apparatus 100 supports a service based on an Internet Service Provider network.

More specifically, when the determiner 120 determines that there is an Internet Service Provider which is mapped with country information included in the metadata, the determiner 120 determines that the display apparatus 200 supports a service based on the Internet Service Provider network.

In other words, a storage (not shown) of the server apparatus 100 has information regarding Internet Service Providers according to a country. When the metadata of the display apparatus 200 is received, the determiner 120 determines whether there is an Internet Service Provider corresponding to the country code based on the country information of the metadata.

At this time, a flag value is determined according to whether there is an Internet Service Provider corresponding to the country information of the metadata of the display apparatus 200.

The flag value is a value to represent whether the display apparatus 200 supports a service based on the Internet Service Provider network. When the display apparatus 200 supports the corresponding function, "ISP flag = YES" is issued, and when the display apparatus 200 does not support the corresponding function, "ISP flag = NO" is issued.

In the case of "ISP flag = YES", the code issuer 130 issues an Internet Service Provider code, and in the case of "ISP flag = NO", the code issuer 130 does not issue an Internet Service Provider code.

The code issuer issues an Internet Service Provider code of an Internet Service Provider network which is connected to the display apparatus 200.

The Internet Service Provider code corresponding to the display apparatus 200 is a code regarding an Internet Service Provider network which is connected to the display apparatus 200. For example, when the display apparatus 200 is a member of an Internet Service Provider network "A", the code issuer 130 issues a code corresponding to the Internet Service Provider network "A" based on the metadata of the display apparatus 200.

Since a country may have multiple Internet Service Providers, the code issuer 130 issues an Internet Service Provider code corresponding to an Internet Service Provider which is connected to the display apparatus 200 from among the multiple Internet Service Providers.

For example, if there are Internet Service Providers A1, A2, and A3 in country A and if there are Internet Service Providers B1 and B2 in country B, Internet Service Provider codes A1, A2, and A3 which are mapped with country A and Internet Service Provider codes B1 and B2 which are mapped with country B may be stored in the storage (not shown) of the server apparatus 100 as a mapping table.

At this time, the code issuer 130 detects an Internet Service Provider network which is connected to the display apparatus 200, and issues an Internet Service Provider code corresponding to the Internet Service Provider network.

In the above example, when the display apparatus 200 is used in country B and is connected to Internet Service Provider network B2, the code issuer 130 issues an Internet Service Provider code corresponding to Internet Service Provider B2.

More specifically, the code issuer 130 determines that from among the Internet Service Provider network information pre-stored in the server apparatus 100, an Internet Service Provider network corresponding to internet protocol (IP) address information included in the metadata is an Internet Service Provider network which is connected to the display apparatus 200, and then issues an Internet Service Provider code corresponding to Internet Service Provider network.

The controller 140 controls the overall operation of the server apparatus 100.

In addition, the controller 140 generates services provided by an Internet Service Provider corresponding to an internal service provider code as an application list.

The Internet Service Providers may provide different two-way services based on the internet.

Accordingly, the controller 140 detects an Internet Service Provider network which is connected to the display apparatus 200 based on metadata received from the display apparatus 200, and issues an Internet Service Provider code to the display apparatus 200.

Subsequently, when the display apparatus 200 requests a list of the services provided by the Internet Service Provider using the Internet Service Provider code, the server apparatus 100 may provide an application list.

When the server apparatus 100 generates the list of the applications which can be executed by the display apparatus 200 based on the metadata and the Internet Service Provider code as described above, the list of the services provided by the Internet Service Provider which is connected to the display apparatus 200 can be provided in the form of application list without an external device such as a set-top box.

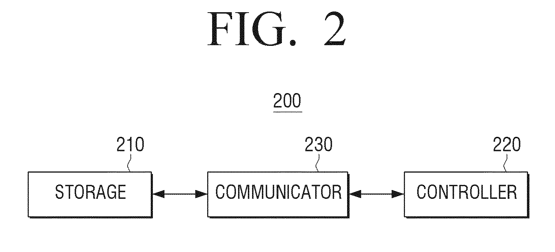

FIG. 2 is a block diagram of a configuration of the display apparatus 200 according to an exemplary embodiment.

As shown in FIG. 2, the display apparatus 200 may include storage 210, a communicator 230, and a controller 220.

The storage 210 stores metadata regarding the display apparatus 200.

The storage 210 may be a built-in memory such as a hard disk driver (HDD), or an external memory such as a memory stick and a memory card.

The communicator 230 transmits metadata of the display apparatus 200 to the server apparatus 100, and receives an Internet Service Provider code corresponding to the metadata and an authentication key from the server apparatus 100.

The Internet Service Provider code is a code corresponding to an Internet Service Provider network which is connected to the display apparatus 200.

In addition, the authentication key is needed for the display apparatus 200 to access the server apparatus 100, thereby preventing an unauthorized display apparatus from accessing the server apparatus 100, changing or deleting information, or inputting false data.

The authentication key is issued based on a unique ID and a model ID of the display apparatus 200 included in the metadata. The issued authentication key may be stored in the storage 210.

Once the authentication key is issued and is stored in the storage 210, the display apparatus 200 may access the server apparatus 100 using the pre-stored authentication key without again requesting the issuance of an authentication key when subsequently accessing the server apparatus 100.

In other words, the authentication key may be issued only when the display apparatus 200 accesses the server apparatus 100 for the first time. In a later access, the display apparatus 200 may access the server apparatus 100 using the issued authentication key.

The controller 220 controls the overall operation of the display apparatus 200.

The controller 220 controls the display apparatus 200 to access the server apparatus 100 using the authentication key and to request the services provided by the internal service provider as an application list.

The display apparatus 200 may further include a display (not shown). On the display (not shown), an application list received from the server apparatus 100 may be displayed.

The application list displayed on the display (not shown) corresponds to services provided by an internal service provider of an Internet Service Provider network which is connected to the display apparatus 200.

In addition, the display apparatus 200 may further include a user interface (not shown) to allow the user to select an application.

When the user selects one of the applications displayed on the display (not shown) through the user interface (not shown), the controller 220 executes the selected application and accesses a server of the Internet Service Provider.

The user may change the Internet Service Provider network which is connected to the display apparatus 200.

For example, assume that the user was a member of Internet Service Provider A, but now wishes to change from Internet Service Provider A to the Internet Service Provider B to receive services from Internet Service Provider B.

In this case, the communicator 230 transmits Internet Service Provider network change information to the server apparatus 100. Subsequently, the controller 220 requests services provided by the new Internet Service Provider as an application list.

Accordingly, although an Internet Service Provider network which is connected to the display apparatus 200 changes, the user may receive services from a new Internet Service Provider in the form of applications, without installing a new set-top box.

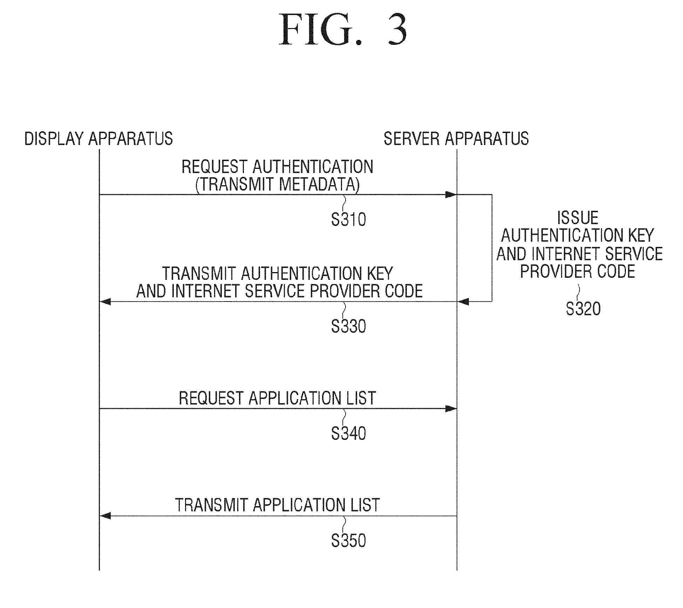

FIG. 3 is a timing chart of operation of the server apparatus 100 and the display apparatus 200 according to an exemplary embodiment.

In operation S310, when the display apparatus 200 accesses the server apparatus 100 for the first time, the display apparatus 200 transmits pre-stored metadata to the server apparatus 100 and requests authentication.

In operation S320, the server apparatus 100 issues an authentication key and an Internet Service Provider code based on the metadata.

The process of issuing the authentication key and the Internet Service Provider code based on the metadata has been described above.

In operation S330, the server apparatus 100 transmits the issued authentication key and Internet Service Provider code to the display apparatus 200.

In operation S340, the display apparatus 200 accesses the server apparatus 100 using the authentication key, and requests that the server apparatus 100 to transmit an application list regarding services provided by an Internet Service Provider corresponding to the Internet Service Provider code.

In response to the request, the server apparatus 100 generates two-way services provided based on the internet by the Internet Service Provider in the form of an application list, and transmits the application list to the display apparatus 200.

If the server apparatus 100 recognizes an Internet Service Provider network which is connected to the display apparatus 100 and provides services of the Internet Service Provider as applications, two-way services based on the internet can be supported without an external device such as a set-top box.

Furthermore, if an application list is generated according to the exemplary embodiment, changed information can be automatically reflected without a new set-top box although the user of the display apparatus 200 changes the Internet Service Provider.

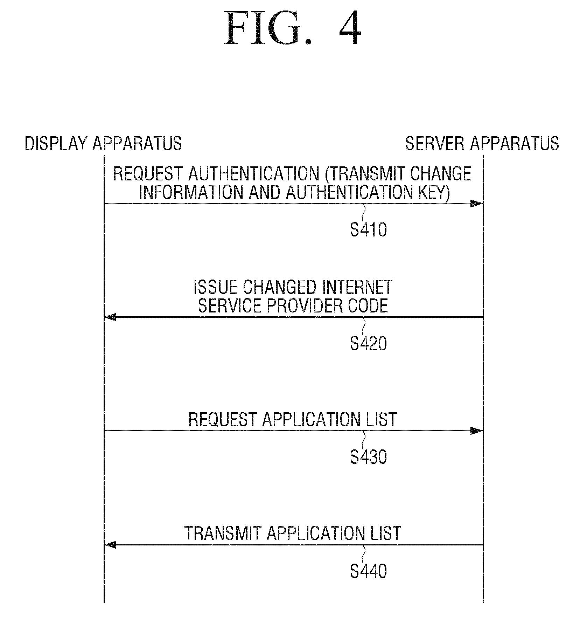

FIG. 4 is a timing chart of a method for generating a new application list when an Internet Service Provider has changed.

In operation S410, when an Internet Service Provider which is connected to the display apparatus 200 has changed, the display apparatus 200 transmits Internet Service Provider change information to the server apparatus 100.

At this point, as the display apparatus 200 has an authentication key in the storage, the authentication process may not be performed.

In operation S420, the server apparatus 100 issues a changed Internet Service Provider code corresponding to the change information of the display apparatus 200 based on a pre-stored mapping table.

For example, when the Internet Service Provider of the display apparatus 200 changes from A1 to A2, the display apparatus 200 transmits Internet Service Provider change information to the server apparatus 100, and the server apparatus 100 issues an Internet Service Provider code corresponding to A2.

In operation S430, the display apparatus 200 requests a list of applications which may be executed in a new Internet Service Provider network.

In operation S440, the server apparatus 100 modifies an application list so that the applications supported by the new Internet Service Provider of the display apparatus 200 are reflected, and the server apparatus 100 transmits the application list to the display apparatus 200.

In order to issue an Internet Service Provider code based on metadata received from the display apparatus 200 as described above, the server apparatus 100 has to store Internet Service Providers corresponding to information regarding a country in which the display apparatus 200 is used, in the form of a mapping table.

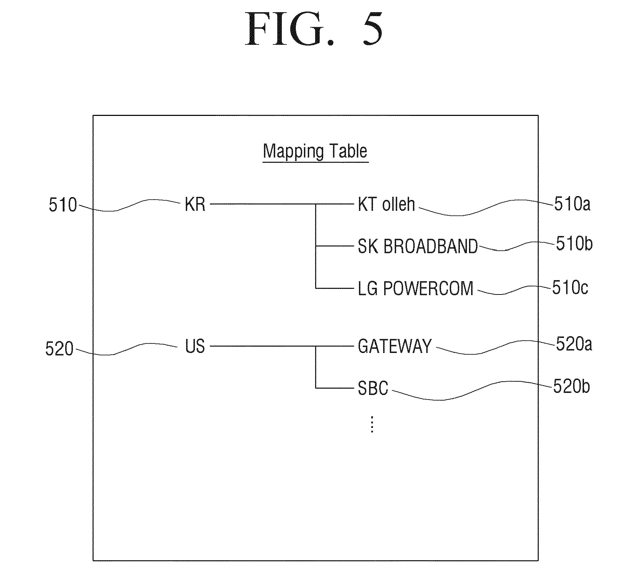

FIG. 5 shows a mapping table according to an exemplary embodiment.

The server apparatus 100 may store Internet Service Providers corresponding to a country in which the display apparatus 200 is used, in the form of a mapping table.

Information regarding countries 510 and 520 in which the display apparatus 200 is used may be included in metadata of the display apparatus 200. When there is an Internet Service Provider which is mapped with country information included in the metadata, the server apparatus 100 determines that the display apparatus 200 supports services based on an Internet Service Provider network.

In this exemplary embodiment, the server apparatus 100 stores only two country codes 510 and 520, but may also store codes of all the countries capable of providing two-way services based on the internet and Internet Service Provider information of the corresponding countries.

Since information regarding a country in which the display apparatus 200 is used is included in metadata of the display apparatus 200, the server apparatus 100 has to receive the metadata from the display apparatus 200 first to issue an Internet Service Provider code.

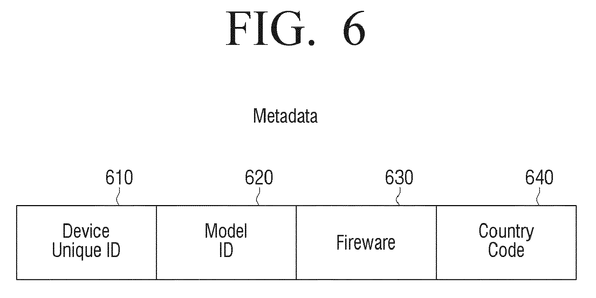

FIG. 6 shows metadata according to an exemplary embodiment.

The metadata is structural data about data, which describes the display apparatus 200.

The metadata according to an exemplary embodiment may include a device unique ID 610, a model ID 620, a firmware 630, and a country code 640. The information listed in this exemplary embodiment is merely an example, and additional information may be included for implementation of the exemplary embodiments.

The device unique ID 610 is an ID given to each display apparatus. The device unique ID 610 may be used for issuance of an authentication key for the display apparatus 200.

The model ID 620 is model information of the display apparatus 200. The server apparatus 100 may use the model ID 620 to generate an application list which may be executed by the display apparatus 200 since applications that are supported by each model may vary.

The firmware 630 is a micro program to control the display apparatus 200. In terms of a program, the firmware 630 is the same as software, but is distinct from general application software since the firmware 630 is closely related to hardware. That is, the firmware 630 has characteristics of both software and hardware.

The country code 640 indicates a country in which the display apparatus 200 is used. The server apparatus 100 may issue an Internet Service Provider code corresponding to the country code using the country code 640 of the metadata.

At this point, mapping information regarding the Internet Service Provider code corresponding to the country code may be pre-stored in the server apparatus 100.

When the server apparatus 100 receives a request for an application list from the display apparatus 200, the server apparatus 100 generates a list including applications which can be executed by the display apparatus 200.

The server apparatus 100 may pre-store metadata regarding applications and generate an executable application list using the pre-stored metadata of the applications.

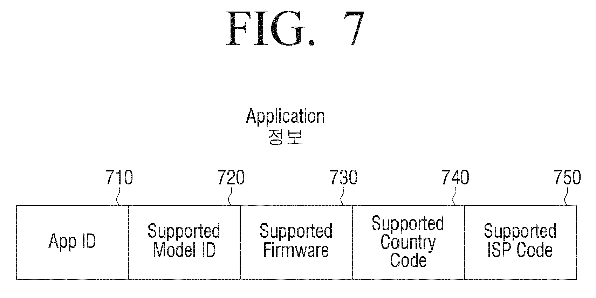

FIG. 7 shows application metadata which is needed to generate an application list.

The application metadata according to an exemplary embodiment may include an application ID 710, a supported model ID 720 of the display apparatus 200 which supports the application, a supported firmware 730 which supports the application, a supported country code 740, and an Internet Service Provider (ISP) code 750.

Metadata of an application basically includes an application ID 710. The application ID 170 is a unique ID which is given to each application and separates the corresponding application from other applications.

The model ID 720 includes model information of a display apparatus that can execute the corresponding application.

Although a single manufacturer may produce display apparatuses, supportable application may vary according to models of the display apparatuses. Accordingly, the model ID 720 includes model information of the display apparatus which supports the corresponding application.

For example, when a model ID of the display apparatus 200 which requests an application list is included in metadata of an application, it is determined that the application can be executed by the display apparatus 200 so that the application can be included in the executable application list.

The firmware 730 is a micro program needed to execute an application. In terms of a program, the firmware 730 is the same as software, but is distinct from general application software since the firmware 730 is closely related to hardware. That is, the firmware 730 has characteristics of both software and hardware.

The country code 740 indicates a code for a country in which the corresponding application can be executed.

For example, if a country in which the display apparatus 200 is used does not support execution of a particular application, the country is not included in metadata of the application. More specifically, the country is not included in a country code 740 of the metadata of the application.

In this case, when the display apparatus 200 requests an executable application list, the application which does not include a country in which the display apparatus 200 is used in the country code 740 is excluded from the executable application list.

In addition, the ISP code 750 stores information regarding an Internet Service Provider which supports execution of the corresponding application.

For example, if only Internet Service Providers A and B support execution of application X, ISP code 750 in metadata of application X only includes information regarding Internet Service Providers A and B.

In this case, if the display apparatus 200 which is connected to Internet Service Provider C requests an executable application list, the server apparatus 100 recognizes that the display apparatus 200 is connected to Internet Service Provider C based on metadata of the display apparatus 200, and determines that the display apparatus 200 cannot execute the application and excludes the application from the list since Internet Service Provider C is not included in the ISP information 750 of the metadata of the application.

In this way, a list of applications which can be executed by the display apparatus 200 may be generated using metadata of applications which are pre-stored in the server apparatus 100.

The generated application list is displayed on the display apparatus 200 for the user.

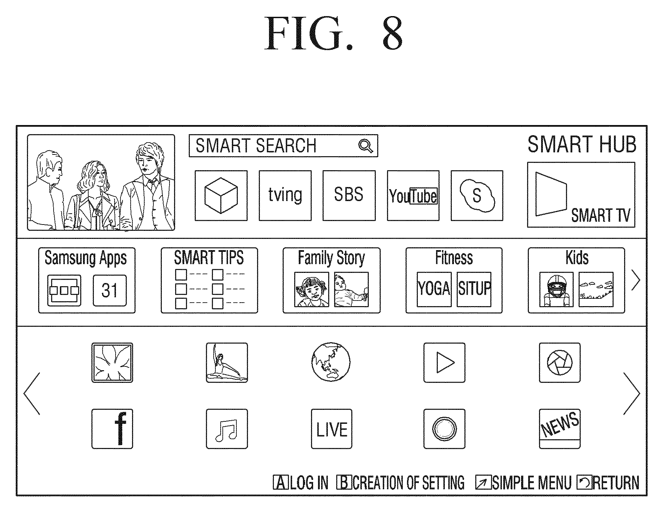

FIG. 8 shows an executable application list which is displayed on the display apparatus 200 according to an exemplary embodiment.

The icons displayed in FIG. 8 are generated using an application list generated by the server apparatus 100 at request of the display apparatus 200.

The user may execute an application by selecting one of the application icons.

When the user selects an application, the display apparatus 200 executes the selected application to provide a corresponding service and accesses a corresponding Internet Service Provider server.

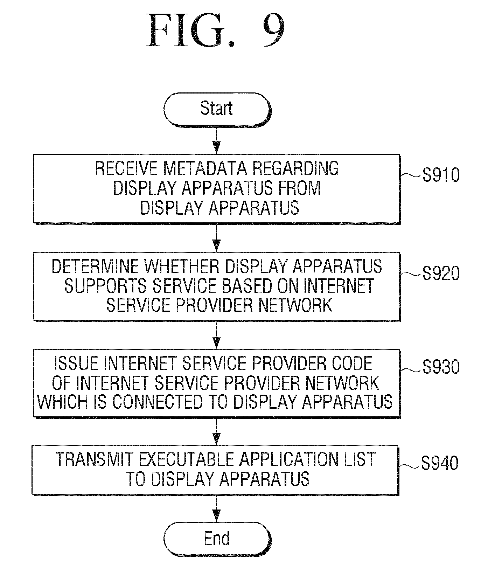

FIG. 9 is a flow chart showing a method for providing an application list using the server apparatus 100 according to an exemplary embodiment.

In operation S910, the server apparatus 100 receives metadata regarding the display apparatus 200 from the display apparatus 200.

The received metadata may include a unique ID and a model ID of the display apparatus 200, a firmware, and a code for a country in which the display apparatus 200 is used.

In operation S920, the server apparatus 100 determines whether the display apparatus 200 supports a service based on an Internet Service Provider network.

When there is an Internet Service Provider which is mapped with the country code of the metadata, the server apparatus 100 determines that the display apparatus 200 supports a service based on an Internet Service Provider network.

In operation S930, the server apparatus 100 issues an Internet Service Provider code corresponding to an Internet Service Provider network which is connected to the display apparatus 200. In operation S940, the server apparatus 100 generates an executable application list and transmits the list to the display apparatus 200.

Furthermore, if an application list is generated as described above, changed information can be automatically reflected without a new set-top box although the user of the display apparatus 200 changes the Internet Service Provider.

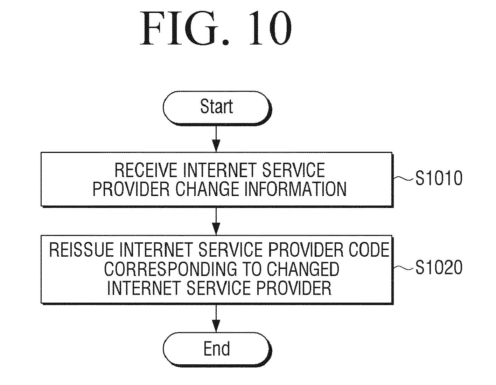

FIG. 10 is a flow chart showing a method for generating an application list when an Internet Service Provider which is connected to the display apparatus 200 has changed according to an exemplary embodiment.

In operation S1010, when an Internet Service Provider which the display apparatus 200 uses changes, the server apparatus 100 receives Internet Service Provider change information.

In operation S1020, the server apparatus 100 reissues an Internet Service Provider code corresponding to a new Internet Service Provider based on pre-stored mapping information.

Since the operation of receiving a request for a list of applications supported by the new Internet Service Provider, generating the application list, and transmitting the application list to the display apparatus 200 is the same as operations S930 and S940 above, description thereof is omitted.

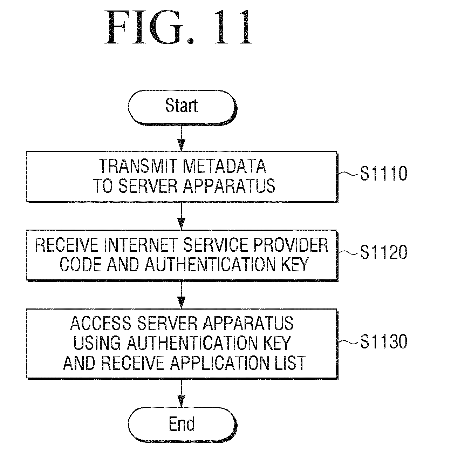

FIG. 11 is a flow chart showing a method for receiving an application list from the server apparatus 100 to the display apparatus 200 according to an exemplary embodiment.

In operation S1110, the display apparatus 200 transmits metadata of the display apparatus 200 to the server apparatus 100 in order to receive services provided by an Internet Service Provider in the form of an application list.

In operation S1120, when the server apparatus 100 analyzes the metadata and issues an Internet Service Provider code and an authentication key, the display apparatus 200 receives the Internet Service Provider code and the authentication key. In operation S1130, the display apparatus 200 accesses the server apparatus 100 using the authentication key, and receives an application list from the server apparatus 100.

The operation of issuing the authentication key may be performed only when the display apparatus 200 accesses the server apparatus 100 for the first time. Afterwards, when accessing the server apparatus 100 again, the display apparatus 200 may use the issued and stored authentication key. Therefore, issuing of the authentication may not be repeated.

The user executes one of the received applications and receives an internet-based two-way service.

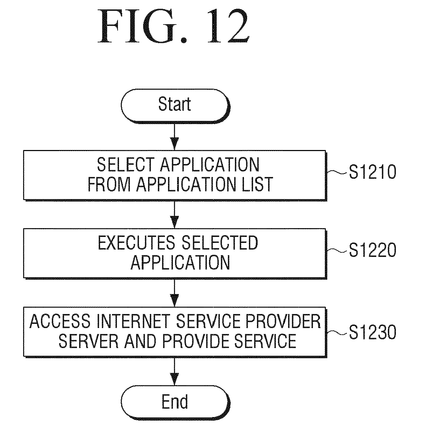

FIG. 12 is a flow chart showing a method for executing an application and receiving a service according to an exemplary embodiment.

In operation S1210, when the display apparatus 200 displays an executable application list, the user may select one of the applications. In operation S1220, the display apparatus 200 executes the selected application, and in operation S1230, the display apparatus 200 accesses an Internet Service Provider server and receives the service.

According to the exemplary embodiments, smart TVs can provide users with internet-based two-way services based on an Internet Service Provider network without an external device, and although an Internet Service Provider network changes, the user can receive services by simple manipulation without buying a new set-top box.

A method for managing a memory of a terminal device according to the exemplary embodiments may be implemented with a program code, be stored in diverse types of non-transitory computer readable media, and be provided to servers or devices.

The non-transitory computer readable medium is a medium which does not store data temporarily such as a register, cash, and memory but stores data semi-permanently and is readable by devices. More specifically, the aforementioned applications or programs may be stored in the non-transitory computer readable medium such as a compact disk (CD), digital video disk (DVD), hard disk, Blu-ray disk, universal serial bus (USB), memory card, and read-only memory (ROM).

The foregoing exemplary embodiments are merely exemplary and are not to be construed as limiting. The present teaching can be readily applied to other types of apparatuses. Also, the description of the exemplary embodiments is intended to be illustrative, and not to limit the scope of the claims, and many alternatives, modifications, and variations will be apparent to those skilled in the art.

## Claims

1. A method for providing an application list using a server apparatus which is connectable to a display apparatus, the method comprising:
receiving metadata regarding the display apparatus from the display apparatus;
determining whether the display apparatus supports a service based on an Internet Service Provider network;
issuing an Internet Service Provider code of an Internet Service Provider network which is connected to the display apparatus; and
generating services provided by an Internet Service Provider corresponding to the Internet Service Provider code as the application list, and transmitting the application list to the display apparatus.

2. The method as claimed in claim 1, wherein in the operation of determining whether the display apparatus supports the service based on the Internet Service Provider network, when there is an Internet Service Provider which is mapped with country information included in the metadata, it is determined that the display apparatus supports the service based on the Internet Service Provider network.

3. The method as claimed in claim 1 or 2, wherein the operation of issuing the Internet Service Provider code comprises:
detecting the Internet Service Provider network which is connected to the display apparatus; and
issuing the Internet Service Provider code corresponding to the Internet Service Provider network.

4. The method as claimed in claim 3, wherein in the operation of detecting the Internet Service Provider network which is connected to the display apparatus, an Internet Service Provider network corresponding to Internet Protocol IP address information included in the metadata from among Internet Service Provider network information which is pre-stored in the server apparatus is detected.

5. The method as claimed in any one of claims 1 to 3, further comprising, when the Internet Service Provider network changes:
receiving Internet Service Provider network change information; and
reissuing an Internet Service Provider code corresponding to a changed Internet Service Provider network.

6. A server apparatus which is connectable to a display apparatus, comprising:
a receiver configured to receive metadata regarding the display apparatus from the display apparatus;
a determiner configured to determine whether the display apparatus supports a service based on an Internet Service Provider network;
a code issuer configured to issue an Internet Service Provider code of an Internet Service Provider network which is connected to the display apparatus; and
a controller configured to generate services provided by an Internet Service Provider corresponding to the Internet Service Provider code as an application list.

7. The server apparatus as claimed in claim 6, further comprising:
a storage configured to store information regarding an Internet Service Provider which is mapped with information regarding a country in which the display apparatus is used,
wherein when there is an Internet Service Provider which is mapped with the country information included in the metadata, the determiner determines that the display apparatus supports the service based on the Internet Service Provider network.

8. The server apparatus as claimed in claim 6 or 7, wherein the code issuer detects the Internet Service Provider network which is connected to the display apparatus, and issues the Internet Service Provider code corresponding to the Internet Service Provider network.

9. The server apparatus as claimed in claim 8, wherein the code issuer detects, as the Internet Service Provider network which is connected to the display apparatus, an Internet Service Provider network corresponding to internet protocol IP address information included in the metadata from among Internet Service Provider network information which is pre-stored in the server apparatus.

10. The server apparatus as claimed in any one of claims 6 to 8, when the Internet Service Provider network changes, the receiver receives Internet Service Provider network change information, and the code issuer reissues an Internet Service Provider code corresponding to a changed Internet Service Provider network.

11. A method for providing an application list using a display apparatus which is connectable to a server apparatus, the method comprising:
transmitting metadata to the server apparatus;
receiving an Internet Service Provider code and an authentication key; and
accessing the server apparatus using the authentication key, and receiving services provided by an Internet Service Provider corresponding to the Internet Service Provider code in a form of an application list.

12. The method as claimed in claim 11, further comprising, when an Internet Service Provider network which is connected to the display apparatus changes:
transmitting Internet Service Provider network change information; and
receiving an Internet Service Provider code corresponding to a changed Internet Service Provider network.

13. The method as claimed in claim 11 or 12, further comprising:
selecting an application from the application list;
executing the selected application; and
accessing a server of the Internet Service Provider and receiving a service provided by the Internet Service Provider.

14. A display apparatus which is connectable to a server apparatus, comprising:
a storage configured to store metadata of the display apparatus;
a communicator configured to transmit the metadata to the server apparatus, and to receive an Internet Service Provider code and an authentication key which correspond to the metadata from the server apparatus; and
a controller configured to access the server apparatus using the authentication key, and to request services provided by an Internet Service Provider corresponding to the Internet Service Provider code in a form of an application list.

15. The display apparatus as claimed in claim 14, when an Internet Service Provider network which is connected to the display apparatus changes, the communicator transmits Internet Service Provider network change information, and the controller requests services provided by a changed Internet Service Provider in the form of the application list.
